# EUROPEAN PATENT APPLICATION

(11) **EP 1 950 927 A1**
(43) Date of publication of application: **30.07.2008**
(21) Application number: 07381007.9
(22) Date of filing: 26.01.2007
(51) Int. Cl.: H04L 29/06

(54) **Method, system and communication device for collective access to a communication network**

(71) Applicant: Whisher Solutions S.L., 08007 Barcelona (ES)
(72) Inventor: Moreno Blanca, Ferran, 08007 Barçelona (ES)
(74) Representative: BOVARD AG

(57) **Abstract**

The invention relates to a method, a system and a communication device for collective access of terminal nodes (11, 12, 13, 14, 15) to a communication network (40), in which a terminal node (11, 12, 13, 14, 15) connects to the communication network (40) through an access node (50) via a first communication channel. In particular, in this method, at least one access node (50) is registered with an identification unit (20), whereby at least one authorisation parameter of the access node (50) is stored in an access database (25) by the identification unit (20) in a way assigned to an access node (50) identification, and at least one terminal node (11, 12, 13, 14, 15) is registered with the identification unit (20), whereby at least a terminal node (11, 12, 13, 14, 15) identification is stored in a user database (27) by the identification unit (20). Then, for connecting to the communication network (40), at least one authorisation parameter of the access node (50) is extracted from the access database (25), based on the identification of the access node (50), and a connection request with the extracted authorisation parameter of the access node (50) is generated and transmitted from the terminal node (11, 12, 13, 14, 15) to the access node (50) via the first communication channel, such that the terminal node (11, 12, 13, 14, 15) accesses the communication network (40).

## Description

### Field of the Invention

This invention relates to a method, a system and a communication device for collective access of terminal nodes to a communication network, where a terminal node connects to the communication network through an access node via a first communication channel. This invention relates in particular to a method, a system and a communication device for collective access of members of a community to the Internet using own resources and resources of other members of the community.

### Background of the Invention

Access to the Internet has nowadays become a matter of utmost importance for both businesses and individuals. A whole range of everyday activities would in fact be difficult or even impossible to achieve today without using this worldwide communication network connecting computers and people. Applications such as e-mail, World Wide Web, or multimedia have deeply changed the manner in which we work and communicate. However, it was only after introduction of wireless Internet-access technologies that the Internet became an indispensable and ubiquitous tool of communication. Wireless access technologies allow the users to connect their computers, PDAs (Personal Digital Assistant), smartphones or other devices to each other without any cables, thus enabling them to work or check their e-mail from virtually any place in the world. Thus, logging into the office network from an airport or a coffee shop, retrieving files or presentations from the corporate network, surfing the Internet, or sending instant messages to co-workers from a conference room or a cafeteria quickly and easily has become a reality through the use of wireless access technologies.

Many different technologies currently exist to achieve wireless access to Internet services. Some of these technologies have already been implemented and are already in common use (i.e. the Bluetooth), others are still in the research phase or are waiting for commercial application (i.e. WiMAX). Nevertheless, the wireless access technology commonly called Wi-Fi is by far the most important at the present time. The acronym Wi-Fi stands for Wireless Fidelity, and is used to define any of the wireless technologies in the IEEE 802.11 specification - including in particular the three wireless protocols 802.11a, 802.11b, and 802.11g. The same technology is often referred to as WLAN (Wireless Local Area Network) since Wi-Fi was originally intended to be used only for mobile computing devices in LANs. However, this technology has recently begun being used for a whole range of applications, such as gaming, basic connectivity of consumer electronics (i.e. televisions and DVD players), or in vehicles as a part of an Intelligent Transportation System.

On one hand, Wi-Fi allows connectivity in the peer-to-peer mode, where devices can connect directly with each other. This connectivity mode is useful above all in consumer electronics and gaming applications. On the other hand, the infrastructure mode allows users to connect to the Internet with their Wi-Fi devices when in proximity to an access point. An access point can be deployed alone, but a group of access points is often installed in certain zones of interest such as airports, train stations, hotels etc. The region covered by one or several access points is commonly called a hotspot. Hotspots can range from a single room with a single person connecting to the internet, to large metropolitan areas, where many users can access the Internet collectively.

Of course, it is obvious that an extensive coverage with Wi-Fi connectivity can only be achieved through huge infrastructure investments. In addition, the deployed access points and complementary accessories (such as routers, hubs, etc.) require continuous maintenance by qualified personnel. These two circumstances have resulted in commercial Wi-Fi Internet access providers continuing to implement the Wi-Fi access only in a number of limited places and their being obliged to charge high fees to their users for granting them the access. Finally, as users want to be able to move around without losing connection to the Internet, Wi-Fi Internet access providers are obliged to deploy access points virtually everywhere in the range of a hotspot. However, as the attitude and movement of users cannot be easily foreseen, some access points can simply become overloaded, while others use only a small part of their overall bandwidth capacities. Therefore, what is now needed is an extensive, easy-to-use, efficient, cheap (or even free-of-charge) collective access to the Internet or other communication networks.

### Summary of the Invention

It is thus a first and main object of the invention to provide a method, a system and a communication device for collective access to a communication network that are capable of fulfilling the above-discussed requirements and which do not have the mentioned drawbacks of the state of the art.

These and still other objects of this invention are attained by the method, the system and the communication device for collective access to a communication network as defined in the independent claims. Further special or preferred embodiments follow moreover from the dependent claims and from the specification.

The above-mentioned objects are achieved through the present invention in particular in that, in a method for collective access to a communication network of terminal nodes, in which a terminal node connects to the communication network through an access node via a first communication channel, at least one access node is registered with an identification unit, at least one authorisation parameter of the access node being stored in an access database by the identification unit in a way assigned to an access node identification, at least one terminal node is registered with the identification unit, at least a terminal node identification being stored in a user database by the identification unit, whereby, for connecting to the communication network, at least one authorisation parameter of the access node is extracted from the access database, based on the identification of the access node, and a connection request with the extracted authorisation parameter of the access node is generated and transmitted from the terminal node to the access node via the first communication channel, whereby the terminal node accesses the communication network. The advantage of such a method is, among other things, that not only does each terminal node that accesses the communication network have to be registered with a central identification unit, but also each access node granting the access to the terminal nodes. This additional registration makes possible registration and use of access nodes that are not necessarily deployed by the same access provider. In particular, access nodes deployed and maintained by individual users can be registered with the central identification unit and can consequently be used for a collective access of all registered users of the system. Nevertheless, only registered terminal nodes are able to receive the authorisation parameters of the access node and are granted access to the communication network, so as to prevent any abuse. Such a method results, on the one hand, in a potentially much denser network of access nodes and a correspondingly much improved access quality, and, on the other hand, in lower costs, both for access providers and users of the system.

In an embodiment variant, after registration of the terminal node with the identification unit, a copy of the access database is transmitted to the terminal node by the identification unit, the transmitted copy of the access database is stored by the terminal node in a local access database of the terminal node, and, for connecting to the communication network, the at least one authorisation parameter of the access node is extracted by the terminal node from the local access database, based on the identification of the access node. This embodiment variant has the advantage, among other things, that the terminal node receives and stores locally an updated copy of the access database with the information about all registered access nodes and the corresponding authorisation parameters upon registration. Thus, each access node possesses at any moment all the necessary information for connecting to a particular access node. Consequently, to make a connection request, the terminal node can simply retrieve the required information from the local copy of the access database. Access to the communication network is thus made possible almost instantaneously and without any further limitation. As no messages have to be exchanged between the terminal node and any other entity prior to sending a connection request with the corresponding authorisation parameters to the access node, access to the communication network is possible even when the terminal node is still completely offline.

In another embodiment variant, for connecting to the communication network, an authorisation request with identification of the access node is generated and transmitted from the terminal node to a connection control unit, at least one connection parameter of the access node is extracted from the access database by the connection control unit, based on the identification of the access node, and an authorisation reply with the extracted connection parameter of the access node is generated and transmitted from the connection control unit to the terminal node. This embodiment variant has the advantage, among other things, that a terminal node can obtain the authorisation parameter of an access node from a third party (i.e. from the connection control unit) prior to connecting to the access node. This connection control unit can be a central unit having the data relating to all registered access nodes. In this case, the connection control unit can be integrated into the identification unit, but it can also be configured as a separate entity. There can also exist a whole series of different connection control units associated with a particular single access node, or even with a group of access nodes. This embodiment variant is of particular importance for terminal nodes having very limited storage space, such as smartphones or PDAs, which are not capable of storing a copy of the access database locally.

In a further embodiment variant, a copy of the access database is transmitted to the connection control unit by the identification unit, the transmitted copy of the access database being stored by the connection control unit in a local access database of the connection control unit, and the at least one authorisation parameter of the access node is extracted by the connection control unit from the local access database, based on the identification of the access node. This embodiment variant has the advantage, among other things, that the connection control unit obtains and stores locally a copy of the access database with the data relating to all registered access nodes and the corresponding authorisation parameters. Thus, each connection control unit possesses at any moment all the information necessary for connecting to a particular access node. An authorisation request by a terminal node can be handled almost instantaneously and a corresponding reply with the required authorisation parameters can be sent almost right away. Correct operation of the connection control unit is thus possible even when no connection to the central access database can be established.

In another embodiment variant, the copy of the access database is transmitted to the terminal node and/or connection control unit by the communication module of the identification unit periodically. This embodiment variant has the advantage, among other things, that the local copies of the access database can be periodically updated. The information and the authorisation parameters of the new registered access nodes or the modifications in the existing entries of the database can thus be forwarded periodically to all terminal nodes and/or connection control units. The number of inconsistencies in the access databases can thus be decreased or even completely eliminated.

In still another embodiment variant, the authorisation request and/or the authorisation reply are transmitted between the terminal node and the connection control unit via a second communication channel different from the first communication channel. This embodiment variant has the advantage, among other things, that the terminal node can use another communication channel to obtain the authorisation parameters of a particular access node and thus circumvent possible bottlenecks on the first communication channel. The other advantage is use of another communication channel when access to the first channel has still not been granted.

In a further embodiment variant, the first and/or second communication channel is achieved using a wireless communication technology. This embodiment variant has the advantage, among other things, that access to the communication network can be achieved in a much more flexible and efficient way, since no cables are necessary. At the same time, many terminal nodes can use the same access node for accessing the communication network. Finally, potential failure of transmission lines can be avoided.

In an embodiment variant, the wireless communication technology comprises WLAN and/or GSM and/or UMTS technologies. This embodiment variant has the advantage, among other things, that these technologies are well known, have matured and are being widely used. Furthermore, these technologies are already standardised, and their use has already been regulated in a very satisfactory way in most countries. Therefore, many compatible terminal nodes and access nodes, as well as the required accessories, can be easily found almost anywhere in the world.

In another embodiment variant, the access node and/or the terminal node are registered with the identification unit via a secured communication channel. This embodiment variant has the advantage, among other things, that no unauthorised parties are able to gain access to the transmitted parameters. Thus, the authorisation parameters exchanged between the terminal nodes and the access node cannot be captured and used for non-authorised access to the communication network. Furthermore, the exchanged confidential data cannot be read by a third party.

In still another embodiment variant, the terminal node is authenticated prior to connecting to the communication network. This embodiment variant has the advantage, among other things, that an additional access control is performed prior to granting the access to the communication network. In this way, the theft of identity can be efficiently eliminated.

In a further embodiment variant, the data transmission between the terminal node and the access node is encrypted. This embodiment variant has the advantage, among other things, that no transmitted data can be read by an unauthorised party. The confidentiality of transmitted information can be guaranteed. Security-sensitive information can also be exchanged and the security-sensitive application implemented, so that the user does not have to do without the usual security requirements.

In yet another embodiment variant, the communication network is the Internet. This embodiment variant has the advantage, among other things, that terminal nodes can obtain potentially ubiquitous access to the Internet in an efficient, easy-to-use and secure way.

At this point, it should be stated that, besides the method for collective access of terminal nodes to a communication network according to the invention, the present invention also relates to a system and a communication device for carrying out the method.

### Brief Description of the Drawings

Other features and advantages of the invention will become apparent from the following description of an embodiment thereof, presented as a non-limiting example, when read in connection with the accompanying drawing in which:
Figure 1 shows a block diagram representing schematically a system for collective access of terminal nodes to a communication network.
Figure 2 shows a block diagram representing schematically a particular embodiment of the system for collective access of terminal nodes to a communication network according to the invention.
Figure 3 shows a block diagram representing schematically a detail of a particular embodiment of the method and the corresponding system for collective access of terminal nodes to a communication network according to the invention.
Figures 4, 5, 6 and 7 show block diagrams representing schematically different other details of a particular embodiment of the method and the corresponding system for collective access of terminal nodes to a communication network according to the invention.

### Description of Specific Embodiments of the Invention

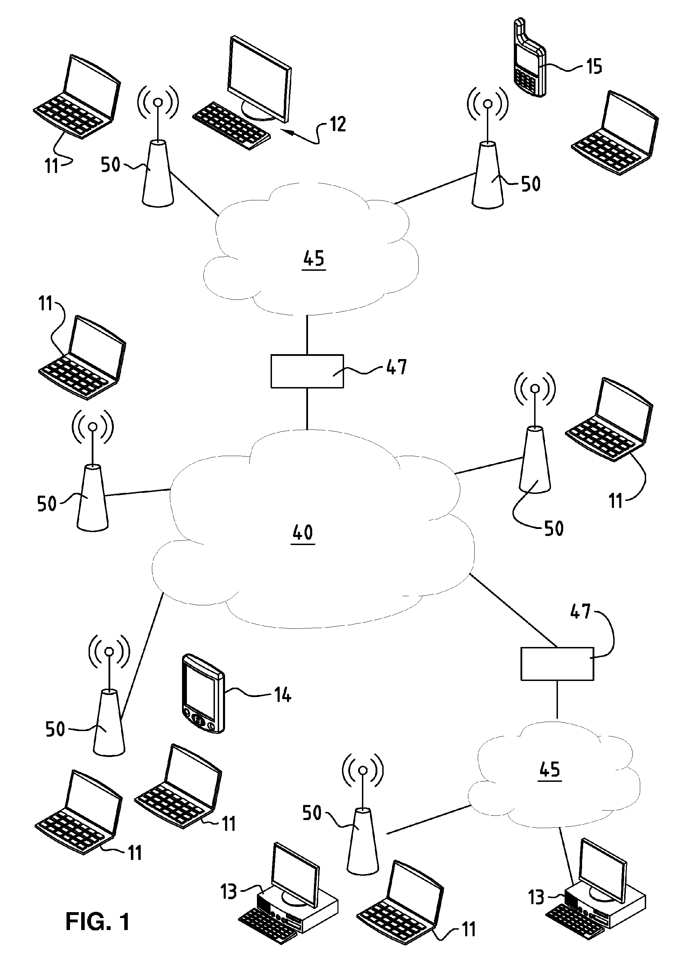

Figure 1 illustrates a system for collective access of terminal nodes to a communication network. In Figure 1, the reference numerals 11, 12, 13, 14 and 15 refer to terminal nodes. The terminal nodes 11, 14 and 15 are preferably portable mobile devices, such as a laptop computers, or respectively notebook computers, PDAs (Personal Digital Assistant) or smartphones. The terminal nodes 12 and 13 are preferably desktop devices, either standalone computers or terminals connected to a server. The terminal nodes 11, 12, 13, 14 and 15 are devices with at least one network interface for connecting to the communication network 40. Network interfaces of terminals 11, 12, 13, 14 and 15 may in particular comprise a network interface for connecting to a wired network, e.g. according to the IEEE 802.3 Ethernet Standard, a network interface for connecting to distant networks over a Public Switched Telephone Network (PSTN), e.g. by means of a modem, a network interface for connecting to a Wireless Local Area Network (WLAN), e.g. according to the IEEE 802.11 standard, a network interface for connecting to a GSM (Global System Mobile) or UMTS (Universal Mobile Telecommunications System) -based mobile network, as well as a network interface for a Personal Area Network (PAN), i.e. directly connecting to closely located devices, e.g. according to a Bluetooth, an IrDA (Infrared Data Association) or ZigBee standard. Moreover, the terminal nodes 11, 12, 13, 14 and 15 can be devices with two or more network interfaces of a same or different connection technology. For example, the terminal node 15, a smartphone, can typically be equipped with at least two network interfaces, one for the Wi-Fi (IEEE 802.11) standard, and another for the GSM and/or UMTS standards. However, other combinations of network interfaces are conceivable.

In Figure 1, the reference numeral 40 refers to a communication network, e.g. the network of an Internet Service Provider, a private or public LAN or WLAN network, or any other network. The communication network 40 can be in particular a secured network, but it can also be a network with no access restrictions whatsoever. Furthermore, the communication network 40 can be a part of the public Internet or the Internet itself. In Figure 1, the reference numeral 45 refers to other communication networks. As shown in Figure 1, communication networks 45 can be connected to the communication network 40, and are suitable for access of terminal nodes 11, 12, 13, 14 and 15 to the communication network 40. The connection between a communication network 45 and the communication network 40 may comprise direct links, e.g. ADSL subscriber lines (ADSL: Asynchronous Digital Subscriber Loop), leased lines, or any other network connections, or any number of intermediate networks, e.g. networks of several interconnected Internet Service Providers (ISP). The communication network 40 may, for example, be considered to be part of the public Internet, whereas the communication network 45 may e.g. be considered to be a private, secured network of a company connectable to the public Internet. For security or other purposes, a gateway 47 can be interposed between the communication network 40 and the communication network 45. The gateway munication network 40 and the communication network 45. The gateway 47 can include in particular firewall and/or NAT functionalities, such that a connection request originating from a communication network 45 and entering the communication network 40, or vice-versa, may be forced to end at the security gateway of the communication network 45. By means of the security gateway of the communication network 45, any connections originating from, or being directed to, the communication network 45 are dealt with according to definable criteria. Such criteria may comprise authentication of the originator of the connection and requirements with respect to data encryption algorithms.

In Figure 1, the terminal nodes 11, 12, 13, 14 and 15 are connected to the communication network 40 via an access point 50. The access point 50 can be connected to the communication network 50 either directly, or indirectly through the communication network 45. The terminal nodes 11, 12, 13, 14 and 15 connect to the access point 50 by means of one or more of their network interfaces. The access point 50 can be e.g. a modem or an access point of a wireless local area network or any other suitable device with the corresponding network interfaces for connecting to the communication network 40. In this context, the access point 50 can be connected to one single terminal node 11, 12, 13, 14 and 15 at a time, or to a plurality of terminal nodes 11, 12, 13, 14 and 15 simultaneously. The data transmitted from the terminal node 11, 12, 13, 14 and 15 to the access point 50 are forwarded to the communication network 40, either directly, or via the communication network 45 and the corresponding gateway 47. As shown in Figure 1, because of the limited range of both wireless and wired local networks, a plurality of access nodes 50 are set up in a distributed way, to enable access to the communication network 40 over larger geographic areas. Illustrated in Figure 1, by way of example, are six access nodes 50; the present invention relates, however, to configurations with any desired number of access nodes 50, any desired number of corresponding units, devices and similar components.

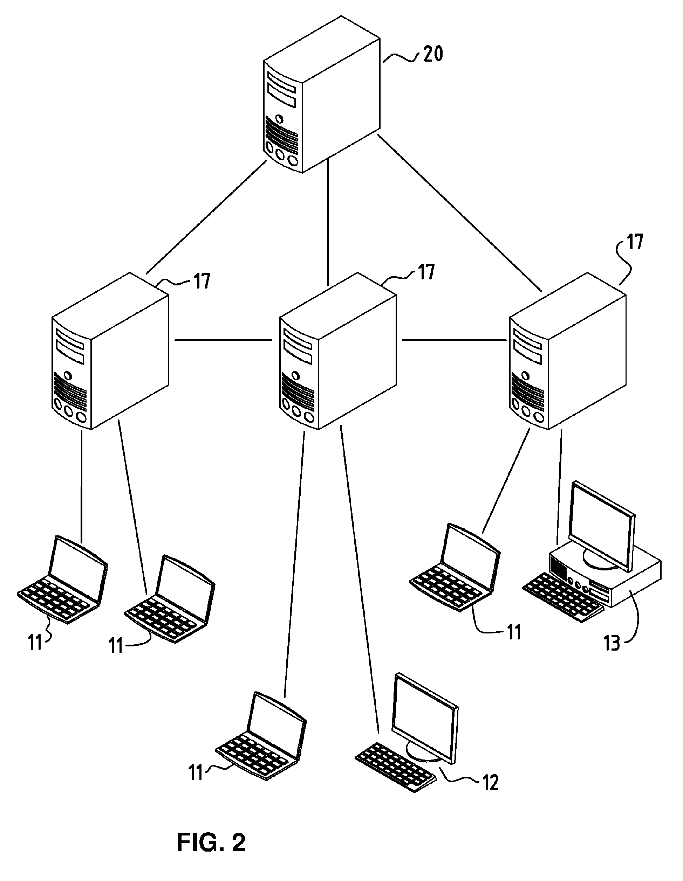

Figure 2 illustrates a particular embodiment of the system for collective access of terminal nodes to a communication network according to the invention. In Figure 2, the reference numerals 11, 12 and 13 refer again to terminal nodes. The terminal nodes 11, 12 and 13 can likewise be portable mobile devices, such as a laptop computers, respectively notebook computers, PDAs (Personal Digital Assistant) or smartphones or desktop devices, either standalone computers or terminals connected to a server. The terminal nodes 11, 12 and 13 possess at least one network interface for connecting to the communication network 40.

In Figure 2, the reference numeral 20 refers to an identification unit. The identification unit 20 represents the centralised part of the system for collective access of terminal nodes 11, 12, 13, 14 and 15 to the communication network 40. The reference numeral 17 refers to a connection control unit, which can be interconnected between the identification unit 20 and the terminal nodes 11, 12, 13, 14 and 15. The identification unit 20 can in particular act as a trust enabler, and can also be used for a number of related functionalities, such as the distribution of software, registration of terminal nodes 11, 12, 13, 14 and 15 and/or access nodes 50, maintenance and control of the access database 25 and user database 27, maintenance and control of the connection control units 17, distribution of the access database 25 and/or user database 27 to the connection control units 17 and/or terminal nodes 11, 12, 13, 14 and 15, etc. In particular, the identification unit 20 can comprise a web server, running at least one web page, with information on the system, registration of users 30, access to the communication network 40, etc.

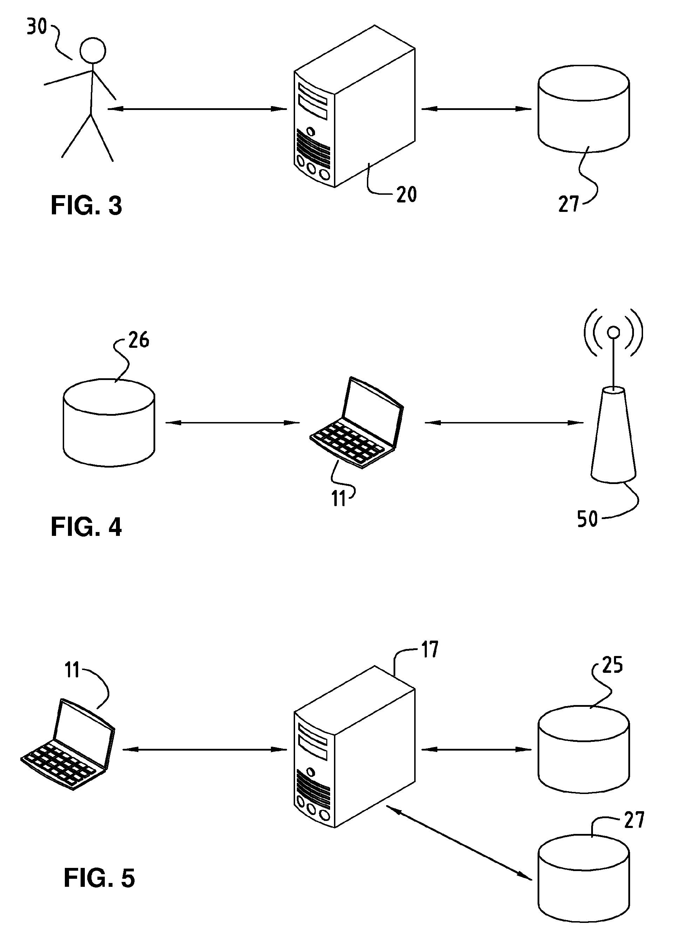

Figure 3 shows a detail of a particular embodiment of the method and the corresponding system for collective access of terminal nodes 11, 12, 13, 14 and 15 to a communication network 40, according to the invention, relating to the registration of users. In Figure 3, the reference numeral 30 refers to a user of the system for collective access of terminal nodes 11, 12, 13, 14 and 15 to the communication network 40. The reference numeral 20 refers to the identification unit 20, and the reference numeral 27 to the user database. User 30 can e.g. register with the identification unit 20 using a unique user name and password. The user name can serve in this context as the identification of the user 30. This basic identification of the user 30 can preferably be cross-verified through a valid e-mail address. However, other verification methods are conceivable. Upon registration, the user 30 can add a personal profile to the user database 27. This profile of the user 30 can contain parameters relating to the user 30, aiming to identify him vis-à-vis the other members of the community. Such parameters can include personal data on the particular user 30, such as the name, birthday, address, gender, age, etc., information about the user's 30 particular preferences, such as preferred music style, food or colour, or any other information relating to the particular user 30.

As those simple parameters do not require much storage capacity, they can easily be stored in the user database 27 on the central identification unit 20. However, in order to give the user 30 maximal freedom in shaping his profile, and to reduce problems related to storage capacities, the profile of the user 30 can be distributed over the different physical locations. The centralised storage on the identification unit 20 has the advantage that all data are concentrated at the same place and that all changes in personal profiles can automatically be reported to all users 30 of the system. Nevertheless, since the content of the personal profile can become rather big, the identification unit 20 has to be configured with huge storage capacities. Consequently, suggested is not to save the whole personal profile of the user 30 on the identification unit 20.

One possible alternative would be to store the personal profile data on the user's 30 terminal node 11, 12, 13, 14 and 15. This, however, could have a negative impact on the availability of the content, since the user's 30 terminal node 11, 12, 13, 14 and 15 may be turned off or not connected to the communication network 40. The other alternative is storage of the user database 27 in a decentralised manner, such that the content of the personal profile of the user 30 is replicated on different entities in the system. This can be seen as a hybrid approach, as the centralised part of the system, i.e. the identification unit 20, would help to identify the content of interest. The content of the user database 27 can be distributed within the system using P2P (Peer-to-Peer) mechanisms such as hashing, or others e.g. between a number of connection control units 17. On the other hand, the content of the user database 27 can also be distributed between the registered terminal nodes 11, 12, 13, 14 and 15. This distribution of the user database 27 can increase the availability of the content and reduce the workload on the identification unit 20, as it is needed only in the initial registration phase, or when updates to the user's 30 profile appear, which implies an update of all the copies on the different connection control units 17 and/or on the terminal nodes 11, 12, 13, 14 and 15. For routing purposes, a reference can be stored on the central identification unit 20 pointing to the physical location of the corresponding content. This reference can be generated preferably automatically by the identification unit 20 upon registration of the user 30, but can also be generated and stored in another way.

Figure 4 shows a detail of a particular embodiment of the method and the corresponding system for collective access of terminal nodes 11, 12, 13, 14 and 15 to a communication network 40, according to the invention, relating to the signing-in of users 30 into the system. The signing-in defines the process when a registered user 30 becomes active and enters the system in order to access the communication network 40 with the terminal node 11, 12, 13, 14 and 15. This step comprises the signing-in of the terminal node 11, 12, 13, 14 and 15 into the system with the particular identification. In Figure 4, the terminal node 11 can scan for available access nodes 50. As soon as an available access node 50 is found, the terminal node 11 can get the corresponding identification of the access node 50. This identification can in particular comprise the ESSID and the MAC address of the access node's 50 air interface, but also any other identification parameter of the particular access node 50. As soon as an available access node 50 is found, the terminal node 11 checks the local copy 26 of the user database 25 and retrieves the authorisation parameters of the particular access node 50. Once the corresponding parameters are retrieved from the local copy 26 of the access database 25, they are used to generate a connection request to the registered interface of the access node 50. If the information is up-to-date, the terminal node 11 can connect to the access node 50. The information transmitted between the terminal node 11 and the access node 50 can preferably be encrypted, so that no unauthorised party is able to gain access to these data.

In another embodiment variant of the invention, the local copy 26 of the access database 25 is not stored at the terminal node 11 itself, but on another device in the system. In particular, the local copy 26 of the access database 25 can be stored on an intermediate device, a connection control unit 17. In this case, once an available access node 50 has been found, the terminal node 11 gets the identification of the access node 50, and makes an authorisation request with the identification of the access node 50 to one or more connection control units 17. The connection control unit 17 receives the authorisation request with the identification of the access point 50, and checks the local copy 26 of the user database 25 to retrieve the authorisation parameters of the particular access node 50. Once the corresponding parameters are retrieved from the local copy 26 of the access database 25, they are used to generate an authorisation reply to the terminal node 11, which then uses these authorisation parameters of the access node 50 to create and send a connection request to the registered interface of the access node 50. Again, if the information is up-to-date, the terminal node 11 can connect to the access node 50. The information transmitted both between the terminal node 11 and the connection control unit 17 and between the terminal node 11 and the access node 50 can preferably be encrypted, so that no unauthorised party is able to gain to these data.

The storage of a copy of the access database 25 on an intermediate device, i.e. on a connection control unit 17, can be of a particular importance for users 30 acceding to the communication network 40 using portable mobile devices such as smartphones and/or PDAs. Usually, these devices are kept lightweight, and are not equipped with large storage capacities. Thus, it would be difficult, or even completely impossible, to keep a copy of the access database 25 on the terminal node 11, 12, 13, 14 and 15. Moreover, as these devices usually have more than one different network interface, an authorisation request and the authorisation reply between the terminal node 11, 12, 13, 14 and 15 and the connection control unit 17 can e.g. be transmitted via a first communication channel such as a GSM channel, while the connection request to the particular access node 50 can be sent via a second communication channel such as a WLAN channel.

The advantage of signing-in using a local copy 26 of the access database 25 is particularly clear when the system comprises a huge number of users 30. Keeping the status of the whole in one central identification unit 20 would not be appropriate for distributed systems, as this requires computing power and a high availability of the identification unit 20. Such a system automatically becomes a single point of failure, and redundancy is thus desirable. For these reasons, this hierarchical approach can preferably be used for the signing-in. The local copies 26 of the access database 25, either on the terminal nodes 11, 12, 13, 14 and 15, or on the connection control units 17, can in particular be preferably synchronised periodically with the identification unit 20.

Figure 5 shows a detail of a particular embodiment of the method and the corresponding system for collective access of terminal nodes 11, 12, 13, 14 and 15 to a communication network 40, according to the invention, relating to the signing-in of terminal nodes 11, 12, 13, 14 and 15 with a connection control unit 17. This embodiment variant relates to extended functionalities of the connection control units 17. In particular, when a terminal node 11, 12, 13, 14 and 15 applies the authorisation parameter of the access node 50 in order to connect to the communication network 40, it can automatically be registered with a connection control unit 17. The terminal node 11, 12, 13, 14 and 15 can e.g. choose one of the connection control units 17 in a list of all available connection control units 17. However, one particular connection control unit 17 can also be assigned automatically to the terminal node 11, 12, 13, 14 and 15. In this sign-in process, the terminal node 11, 12, 13, 14 and 15 authenticates itself with the identification parameters, such as a user name and a password. Then, the connection control unit 17 checks the identity of the terminal node 11, 12, 13, 14 and 15 in the user database 27. The user database 27 can, again, be stored on the identification unit 20, but a copy of the user database 27 can also be stored locally on the connection control unit 17. Once the connection control unit 17 authenticates the terminal node 11, 12, 13, 14 and 15, it can send the authorisation parameters for the connection to the terminal node 11, 12, 13, 14 and 15, and store the corresponding parameter locally. In an embodiment variant, the connection control unit 17 can then notify the owner of the particular access node 50 about a new visiting terminal node 11, 12, 13, 14 and 15.

Once a terminal node 11, 12, 13, 14 and 15 has signed-in with a particular connection control unit 17 and acquired access to the communication network 40, the presence and connection information of the terminal node 11, 12, 13, 14 and 15 can be sent to the other connection control nodes 17, in order to ease proactively the connection establishment. Thus, each connection control unit 17 can forward the information e.g. to a certain random number of the connection control units 17. If no explicit log-off mechanism of terminal nodes 11, 12, 13, 14 and 15 is proposed, the connection control unit 17 can recheck periodically the presence of the terminal nodes 11, 12, 13, 14 and 15 in order to keep the list of present terminal nodes 11, 12, 13, 14 and 15 up-to-date. This is of particular importance if the user database 27 is distributed between different terminal nodes 11, 12, 13, 14 and 15 and/or different connection control units 17.

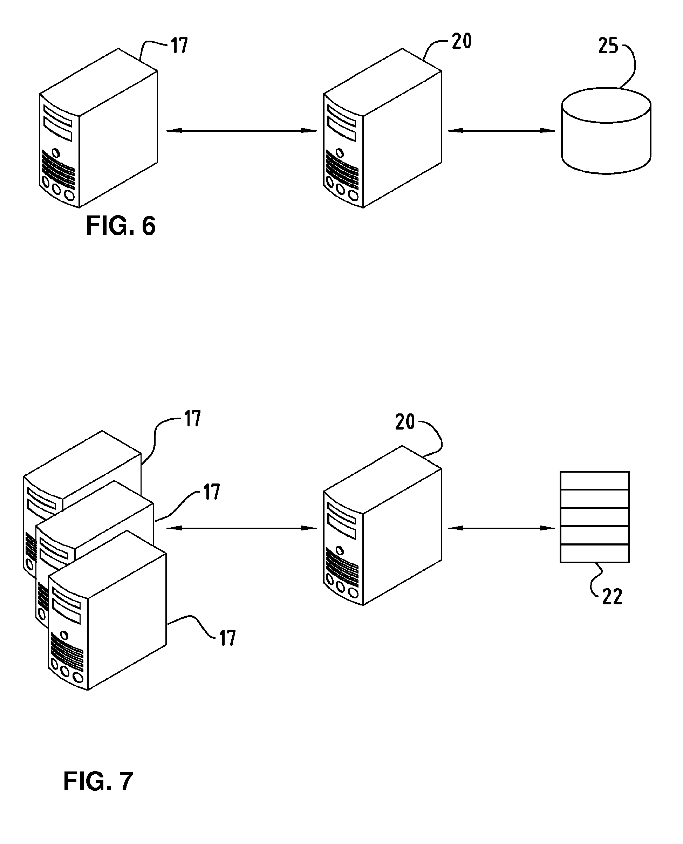

Figure 6 shows a detail of a particular embodiment of the method and the corresponding system for collective access of terminal nodes 11, 12, 13, 14 and 15 to a communication network 40, according to the invention, relating to the distribution of content between the identification unit 20 and a connection control unit 17. As already mentioned, the identification unit 20 may distribute different databases between other devices in the system. In particular, the access database 25 and/or the user database 27 may be distributed between different connection control units 17. Similarly, the access database 25 and/or the user database 27 may be distributed between authorised terminal nodes 11, 12, 13, 14 and 15. In the same manner, the identification unit 20 may have a list 22 of all connection control units 17, which can also be distributed between different connection control units 17 or even between different terminal nodes 11, 12, 13, 14 and 15, as shown in Figure 7. The list 22 of connection control units 17 can help to maintain and control the connection control units 17 and to track the changes in the access database 25 and/or user database 27. On the other hand, the connection control units 17 may use this list 22 to establish the communication among themselves. This distribution of the current list 22 of connection control units 17 can e.g. be performed by the identification unit 20 periodically.

The method and the system for collective access of terminal nodes to the communication network according to the invention provides a possibility for building up a community of members who want to share their Wi-Fi access resources and are ready to interact. In this respect, the method and the system according to the present invention allow a range of added-value services to be presented to the users, such as network personalisation, exchange of local contents, rating of available hotspots, (instant) messaging, monitoring of users etc. Nevertheless, these examples are given solely for information purposes, and a person skilled in the art can easily appreciate that a whole range of other services can be implemented in a similar manner.

Although the present disclosure has been described with reference to particular means, materials and embodiments, one skilled in the art can easily ascertain from the foregoing description the essential characteristics of the present disclosure, while various changes and modifications may be made to adapt the various uses and characteristics without departing from the spirit and scope of the present invention as set forth in the following claims.

## Claims

1. Method for collective access of terminal nodes (11, 12, 13, 14, 15) to a communication network (40), in which a terminal node (11, 12, 13, 14, 15) connects to the communication network (40) through an access node (50) via a first communication channel, **characterised**
**in that** at least one access node (50) is registered with an identification unit (20), at least one authorisation parameter of the access node (50) being stored in an access database (25) by the identification unit (20) in a way assigned to an access node (50) identification,
**in that** at least one terminal node (11, 12, 13, 14, 15) is registered with the identification unit (20), at least a terminal node (11, 12, 13, 14, 15) identification being stored in a user database (27) by the identification unit (20),
**in that**, for connecting to the communication network (40), at least one authorisation parameter of the access node (50) is extracted from the access database (25), based on the identification of the access node (50), and
**in that** a connection request with the extracted authorisation parameter of the access node (50) is generated and transmitted from the terminal node (11, 12, 13, 14, 15) to the access node (50) via the first communication channel, whereby the terminal node (11, 12, 13, 14, 15) accesses the communication network (40).

2. Method according to claim 1, **characterised**
**in that**, after registration of the terminal node (11, 12, 13, 14, 15) with the identification unit (20), a copy of the access database (25) is transmitted to the terminal node (11, 12, 13, 14, 15) by the identification unit (20),
**in that** the transmitted copy of the access database (25) is stored by the terminal node (11, 12, 13, 14, 15) in a local access database (26) of the terminal node (11, 12, 13, 14, 15), and
**in that**, for connecting to the communication network (40), the at least one authorisation parameter of the access node (50) is extracted by the terminal node (11, 12, 13, 14, 15) from the local access database (26), based on the identification of the access node (50).

3. Method according to claim 1, **characterised**
**in that**, for connecting to the communication network (40), an authorisation request with the identification of the access node (50) is generated and transmitted from the terminal node (11, 12, 13, 14, 15) to a connection control unit (17),
**in that** at least one connection parameter of the access node (50) is extracted from the access database (25) by the connection control unit (17), based on the identification of the access node (50), and
**in that** an authorisation reply with the extracted connection parameter of the access node (50) is generated and transmitted from the connection control unit (17) to the terminal node (11, 12, 13, 14, 15).

4. Method according to claim 3, **characterised in that** a copy of the access database (25) is transmitted to the connection control unit (17) by the identification unit (20), the transmitted copy of the access database (25) being stored by the connection control unit (17) in a local access database (26) of the connection control unit (17), and
**in that** the at least one authorisation parameter of the access node (50) is extracted by the connection control unit (17) from the local access database, based on the identification of the access node (50).

5. Method according to claims 2 or 4, **characterised in that** the copy of the access database (25) is transmitted to the terminal node (11, 12, 13, 14, 15) and/or connection control unit (17) by the communication module of the identification unit (20) periodically.

6. Method according to any one of the claims 3 to 5, **characterised in that** the authorisation request and/or the authorisation reply are transmitted between the terminal node (11, 12, 13, 14, 15) and the connection control unit (17) via a second communication channel different from the first communication channel.

7. Method according to any one of the claims 1 to 6, **characterised in that** the first and/or second communication channel is achieved using a wireless communication technology.

8. Method according to claim 7, **characterised in that** the wireless communication technology comprises WLAN and/or GSM and/or UMTS technologies.

9. Method according to any one of the claims 1 to 8, **characterised in that** the access node (50) and/or the terminal node (11, 12, 13, 14, 15) are registered with the identification unit (20) via a secured communication channel.

10. Method according to any one of the claims 1 to 9, **characterised**
**in that** the terminal node (11, 12, 13, 14, 15) is authenticated prior to connecting to the communication network (40).

11. Method according to any one of the claims 1 to 10, **characterised**
**in that** the data transmission between the terminal node (11, 12, 13, 14, 15) and the access node (50) is encrypted.

12. Method according to any one of the claims 1 to 11, **characterised**
**in that** the communication network (40) is the Internet.

13. System for collective access of terminal nodes (11, 12, 13, 14, 15) to a communication network (40), in which a terminal node (11, 12, 13, 14, 15) connects to the communication network (40) through an access node (50) via a first communication channel, **characterised in that** the system comprises
- an identification unit (20) having
• means for registering at least one access node (50), at least one authorisation parameter of the access node (50) being stored in an access database (25) in a way assigned to an identification of the access node (50), and
• means for registering at least one terminal node (11, 12, 13, 14, 15), at least an identification of the terminal node (11, 12, 13, 14, 15) being stored in a user database (27), and
- a terminal node (11, 12, 13, 14, 15) with means for generating a connection request with the extracted authorisation parameter of the access node (50) and transmitting it to the access node (50) via the first communication channel.

14. System according to claim 13, **characterised in that** the identification unit (20) further comprises means for transmitting a copy of the access database (25) to the terminal node (11, 12, 13, 14, 15) after registration of the terminal node (11, 12, 13, 14, 15) with the identification unit (20),
**in that** the terminal node (11, 12, 13, 14, 15) comprises a local access database (26) for storing the transmitted copy of the access database (25), and
**in that** the terminal node (11, 12, 13, 14, 15) comprises means for extracting at least one authorisation parameter of the access node (50) from the local access database (26), based on the identification of the access node (50).

15. System according to claim 13, **characterised in that** the terminal node (11, 12, 13, 14, 15) comprises means for generating and transmitting to a connection control unit (17) an authorisation request with the identification of the access node (50),
**in that** the connection control unit (17) comprises means for extracting at least one connection parameter of the access node (50) from the access database (25), based on the identification of the access node (50), and means for generating and transmitting to the terminal node (11, 12, 13, 14, 15) an authorisation reply with the extracted connection parameter of the access node (50).

16. Method according to claim 15, **characterised in that** the identification unit (20) comprises means for transmitting a copy of the access database (25) to the connection control unit (17), and
**in that** the connection control unit (17) comprises means for storing the transmitted copy of the access database (25) in a local access database of the connection control unit (17).

17. System according to claims 14 or 16, **characterised in that** the copy of the access database (25) is transmitted to the terminal node (11, 12, 13, 14, 15) and/or connection control unit (17) by the identification unit (20) periodically.

18. System according to any one of the claims 15 to 17, **characterised in that** the authorisation request and/or the authorisation reply are transmitted between the terminal node (11, 12, 13, 14, 15) and the connection control unit (17) via a second communication channel different from the first communication channel.

19. System according to any one of the claims 13 to 18, **characterised in that** the first and/or second communication channel is achieved using a wireless communication technology.

20. System according to claim 19, **characterised in that** the wireless communication technology comprises WLAN and/or GSM and/or UMTS technologies.

21. System according to any one of the claims 13 to 20, **characterised in that** the access node (50) and/or the terminal node (11, 12, 13, 14, 15) are registered with the identification unit (20) via a secured communication channel.

22. System according to any one of the claims 13 to 21, **characterised in that** the terminal node (11, 12, 13, 14, 15) comprises means for authentication prior to connecting to the communication network (40).

23. System according to any one of the claims 13 to 22, **characterised in that** the data transmission between the terminal node (11, 12, 13, 14, 15) and the access node (50) is encrypted.

24. System according to any one of the claims 13 to 23, **characterised in that** the communication network (40) is the Internet.

25. Communication device for collective access of terminal nodes (11, 12, 13, 14, 15) to a communication network (40), **characterised in that** it comprises
means for receiving an authorisation request with the identification of the access node (50) from the terminal node (11, 12, 13, 14, 15),
means for extracting at least one connection parameter of the access node (50) from the access database (25), based on the identification of the access node (50), and
means for generating and transmitting to the terminal node (11, 12, 13, 14, 15) an authorisation reply with the extracted connection parameter of the access node (50).

26. Communication device according to claim 25, **characterised in that** it further comprises means for receiving a copy of the access database (25) from the identification unit (20), and
means for storing the transmitted copy of the access database (25) in a local access database of the connection control unit (17).

## Amended claims

### Amended claims in accordance with Rule 137(2) EPC.

**1.** Method for collective access of terminal nodes (11, 12, 13, 14, 15) to a communication network (40), in which a terminal node (11,12,13,14,15) connects to the communication network (40) through an access node (50) via a first communication channel,
wherein at least one access node (50) is registered with an identification unit (20), at least one authorisation parameter of the access node (50) being stored in an access database (25) by the identification unit (20) in a way assigned to an access node (50) identification,
wherein at least one terminal node (11, 12, 13, 14, 15) is registered with the identification unit (20), at least a terminal node (11, 12, 13, 14, 15) identification being stored in a user database (27) by the identification unit (20),
wherein, for connecting to the communication network (40), at least one authorisation parameter of the access node (50) is extracted from the access database (25), based on the identification of the access node (50), and
wherein a connection request with the extracted authorisation parameter of the access node (50) is generated and transmitted from the terminal node (11,12, 13, 14, 15) to the access node (50) via the first communication channel, whereby the terminal node (11, 12, 13, 14, 15) accesses the communication network (40),
**characterised**
**in that**, after registration of the terminal node (11, 12, 13, 14, 15) with the identification unit (20), a copy of the access database (25) is transmitted to the terminal node (11, 12, 13, 14, 15) by the identification unit (20),
**in that** the transmitted copy of the access database (25) is stored by the terminal node (11, 12, 13,14, 15) in a local access database (26) of the terminal node (11, 12, 13, 14, 15), and
**in that**, for connecting to the communication network (40), the at least one authorisation parameter of the access node (50) is extracted by the terminal node (11,12,13,14,15) from the local access database (26), based on the identification of the access node (50).

**2.** Method according to claim 1, **characterised**
**in that**, for connecting to the communication network (40), an authorisation request with the identification of the access node (50) is generated and transmitted from the terminal node (11, 12, 13, 14, 15) to a connection control unit (17),
**in that** at least one connection parameter of the access node (50) is extracted from the access database (25) by the connection control unit (17), based on the identification of the access node (50), and
**in that** an authorisation reply with the extracted connection parameter of the access node (50) is generated and transmitted from the connection control unit (17) to the terminal node (11, 12, 13, 14, 15).

**3.** Method according to claim 2, **characterised in that** a copy of the access database (25) is transmitted to the connection control unit (17) by the identification unit (20), the transmitted copy of the access database (25) being stored by the connection control unit (17) in a local access database (26) of the connection control unit (17), and
**in that** the at least one authorisation parameter of the access node (50) is extracted by the connection control unit (17) from the local access database, based on the identification of the access node (50).

**4.** Method according to claims 1 or 3, **characterised in that** the copy of the access database (25) is transmitted to the terminal node (11,12, 13, 14, 15) and/or connection control unit (17) by the communication module of the identification unit (20) periodically.

**5.** Method according to any one of the claims 2 to 4, **characterised in that** the authorisation request and/or the authorisation reply are transmitted between the terminal node (11, 12, 13, 14, 15) and the connection control unit (17) via a second communication channel different from the first communication channel.

**6.** Method according to any one of the claims 1 to 5, **characterised in that** the first and/or second communication channel is achieved using a wireless communication technology.

**7.** Method according to claim 6, **characterised in that** the wireless communication technology comprises WLAN and/or GSM and/or UMTS technologies.

**8.** Method according to any one of the claims 1 to 7, **characterised in that** the access node (50) and/or the terminal node (11, 12, 13, 14, 15) are registered with the identification unit (20) via a secured communication channel.

**9.** Method according to any one of the claims 1 to 8, **characterised in that** the terminal node (11, 12, 13, 14, 15) is authenticated prior to connecting to the communication network (40).

**10.** Method according to any one of the claims 1 to 9, **characterised in that** the data transmission between the terminal node (11, 12, 13, 14, 15) and the access node (50) is encrypted.

**11.** Method according to any one of the claims 1 to 10, **characterised in that** the communication network (40) is the Internet.

**12.** System for collective access of terminal nodes (11, 12, 13, 14, 15) to a communication network (40), in which a terminal node (11, 12, 13, 14, 15) connects to the communication network (40) through an access node (50) via a first communication channel, comprising
- an identification unit (20) having
• means for registering at least one access node (50), at least one authorisation parameter of the access node (50) being stored in an access database (25) in a way assigned to an identification of the access node (50), and
• means for registering at least one terminal node (11, 12, 13, 14, 15), at least an identification of the terminal node (11, 12, 13, 14, 15) being stored in a user database (27), and
- a terminal node (11, 12, 13, 14, 15) with means for generating a connection request with the extracted authorisation parameter of the access node (50) and transmitting it to the access node (50) via the first communication channel,
**characterised**
**in that** the identification unit (20) further comprises means for transmitting a copy of the access database (25) to the terminal node (11, 12, 13, 14, 15) after registration of the terminal node (11, 12, 13, 14, 15) with the identification unit (20),
**in that** the terminal node (11,12,13, 14, 15) comprises a local access database (26) for storing the transmitted copy of the access database (25), and
**in that** the terminal node (11, 12, 13, 14, 15) comprises means for extracting at least one authorisation parameter of the access node (50) from the local access database (26), based on the identification of the access node (50).

**13.** System according to claim 12, **characterised in that** the terminal node (11, 12, 13, 14, 15) comprises means for generating and transmitting to a connection control unit (17) an authorisation request with the identification of the access node (50),
**in that** the connection control unit (17) comprises means for extracting at least one connection parameter of the access node (50) from the access database (25), based on the identification of the access node (50), and means for generating and transmitting to the terminal node (11, 12, 13, 14, 15) an authorisation reply with the extracted connection parameter of the access node (50).

**14.** Method according to claim 13, **characterised in that** the identification unit (20) comprises means for transmitting a copy of the access database (25) to the connection control unit (17), and
**in that** the connection control unit (17) comprises means for storing the transmitted copy of the access database (25) in a local access database of the connection control unit (17).

**15.** System according to claims 12 or 14, **characterised in that** the copy of the access database (25) is transmitted to the terminal node (11, 12, 13, 14, 15) and/or connection control unit (17) by the identification unit (20) periodically.

**16.** System according to any one of the claims 13 to 15, **characterised in that** the authorisation request and/or the authorisation reply are transmitted between the terminal node (11, 12, 13, 14, 15) and the connection control unit (17) via a second communication channel different from the first communication channel.

**17.** System according to any one of the claims 12 to 16, **characterised in that** the first and/or second communication channel is achieved using a wireless communication technology.

**18.** System according to claim 17, **characterised in that** the wireless communication technology comprises WLAN and/or GSM and/or UMTS technologies.

**19.** System according to any one of the claims 12 to 18, **characterised in that** the access node (50) and/or the terminal node (11, 12, 13, 14, 15) are registered with the identification unit (20) via a secured communication channel.

**20.** System according to any one of the claims 12 to 19, **characterised in that** the terminal node (11, 12, 13, 14, 15) comprises means for authentication prior to connecting to the communication network (40).

**21.** System according to any one of the claims 12 to 20, **characterised in that** the data transmission between the terminal node (11, 12, 13, 14, 15) and the access node (50) is encrypted.

**22.** System according to any one of the claims 12 to 21, **characterised in that** the communication network (40) is the Internet.

**23.** Communication device for collective access of terminal nodes (11, 12, 13, 14, 15) to a communication network (40), comprising
means for receiving an authorisation request with the identification of the access node (50) from the terminal node (11, 12, 13, 14, 15),
means for extracting at least one connection parameter of the access node (50) from the access database (25), based on the identification of the access node (50), and
means for generating and transmitting to the terminal node (11, 12, 13, 14, 15) an authorisation reply with the extracted connection parameter of the access node (50),
**characterised in that** it further comprises means for receiving a copy of the access database (25) from the identification unit (20), and
means for storing the transmitted copy of the access database (25) in a local access database of the connection control unit (17).
